# EUROPÄISCHE PATENTANMELDUNG

(11) **EP 2 484 208 A1**
(43) Veröffentlichungstag der Anmeldung: **08.08.2012**
(21) Anmeldenummer: 12000616.8
(22) Anmeldetag: 31.01.2012
(51) Int. Cl.: A01K 5/02, A01K 39/01

(54) **Fütterungsanlage für die Tierhaltung und Verfahren zu ihrem Betreiben**

(30) Priorität: 03.02.2011 DE 102011010219
(71) Anmelder: Keller, Erwin, 97215 Uffenheim (DE)
(72) Erfinder: Keller, Erwin, 97215 Uffenheim (DE)
(74) Vertreter: Abel, Martin

(57) **Zusammenfassung**

Es wird eine Fütterungsanlage für die Tierhaltung und ein Verfahren zum Betreiben einer Fütterungsanlage für die Tierhaltung vorgeschlagen. Die Fütterungsanlage enthält mindestens ein Dosierbehältnis (4, 4'), dem eine elektromotorisch betätigte Futtermittel-Ausgabeeinrichtung 8, 8' zugeordnet ist, wobei die Ausgaberate durch einen Regelkreis kontrolliert wird, in den das Ergebnis von Kontrollwiegungen eingeht. Um auch bei einem großen Futtelmittelbedarf einen ununterbrochenen Fütterungsvorgang zu ermöglichen, kann die Futtermittelmenge jedes Dosierbehältnisses (4, 4') von Zeit zu Zeit nachgefüllt werden, wobei zur Vermeidung der Verfälschung von Messdaten die während eines Nachfüllvorganges auftretenden Gewichtsänderungen des Dosierbehältnisses bei der Ansteuerung der Futtermittel-Ausgabeeinrichtungen (8, 8') unberücksichtigt bleibt.

## Beschreibung

Die Erfindung betrifft eine Fütterungsanlage für die Tierhaltung, mit einer Zubereitungsstation, in der unter Verwendung verschiedener Futtermittel, die in von Zeit zu Zeit nachzufüllenden Dosierbehältnissen bereitstellbar sind, tierspezifische Futtermittelmischungen zubereitbar sind und die mehrere Dosierbehältnisse enthält, denen jeweils eine Waage und eine elektromotorisch betätigte Futtermittel-Ausgabeeinrichtung zugeordnet sind, wobei den Elektromotoren der Futtermittel-Ausgabeeinrichtungen gemeinsam eine Steuereinrichtung zugeordnet ist, durch die eine gleichzeitige Futtermittel-Ausgabe unterschiedlicher variabler Ausgaberaten der einzelnen Futtermittel-Ausgabeeinrichtungen steuerbar ist, wobei die Steuereinrichtung über eine elektronische Steuereinheit verfügt, die mit einem Regler ausgestattet ist, der zur voneinander unabhängigen drehzahlgeregelten Ansteuerung der Elektromotoren einer oder mehrerer der Futtermittel-Ausgabeeinrichtungen ausgebildet ist, wobei als Basis für die von dem Regler generierbare und den Elektromotoren jeweils zuzuführende Stellgröße eine durch eine kontinuierliche oder von Zeit zu Zeit erfolgende Kontrollwiegung mittels einer Waage erfasste Gewichtsänderung der im jeweils zugeordneten Dosierbehältnis befindlichen Futtermittelmenge herangezogen wird.

Die Erfindung betrifft ferner ein Verfahren zum Betreiben einer Fütterungsanlage für die Tierhaltung, wobei die Fütterungsanlage eine Zubereitungsstation aufweist, in der unter Verwendung verschiedener Futtermittel, die in von Zeit zur Zeit nachzufüllenden Dosierbehältnissen bereitgestellt werden, tierspezifische Futtermittelmischungen zubereitbar sind und die mehrere Dosierbehältnisse enthält, denen jeweils eine Waage und eine elektromotorisch betätigte Futtermittel-Ausgabeeinrichtung zugeordnet sind, wobei den Elektromotoren der Futtermittel-Ausgabeeinrichtungen gemeinsam eine Steuereinrichtung zugeordnet ist, durch die eine gleichzeitige Futtermittelausgabe unterschiedlicher variabler Ausgaberaten der einzelnen Futtermittel-Ausgabeeinrichtungen steuerbar ist, wobei die Steuereinrichtung über eine elektronische Steuereinheit verfügt, die mit einem Regler ausgestattet ist, der zur voneinander unabhängigen drehzahlgeregelten Ansteuerung der Elektromotoren einer oder mehrerer der Futtermittel-Ausgabeeinrichtungen ausgebildet ist, wobei als Basis für die von dem Regler generierbare und den Elektromotoren jeweils zuzuführende Stellgröße eine durch eine kontinuierliche oder von Zeit zu Zeit erfolgenden Kontrollwiegung mittels einer Waage erfasste Gewichtsänderung der im jeweils zugeordneten Dosierbehältnis befindlichen Futtermittelmenge herangezogen wird.

Eine Fütterungsanlage mit zugehörigem Betriebsverfahren der vorgenannten Art ist aus der DE 197 56 367 C2 bekannt. Derartige Fütterungsanlagen und Verfahren werden im Rahmen der Tierhaltung und insbesondere bei der Haltung von Rindvieh, Schweinen oder Geflügel eingesetzt. In dem bekannten Fall enthält eine Fütterungsanlage mehrere in einer Zubereitungsstation angeordnete, dort als Vorratsbehältnisse bezeichnete Dosierbehältnisse, die jeweils mit einer an eine Steuereinrichtung angeschlossenen Futtermittel-Ausgabeeinrichtung ausgestattet sind. Die Steuereinrichtung ermöglicht eine Vorgabe der Mischungsanteile der Komponenten der gewünschten Futtermittelmischung. Ein besonderer Vorteil des bekannten Aufbaus liegt darin, dass unter Aufrechterhaltung eines kontinuierlichen Betriebes eine exakte Dossierung der gewünschten Futtermittelmischung gewährleistet werden kann. Hierzu verfügt die Steuereinrichtung über einen Regler, der eine voneinander unabhängige drehzahlgeregelte Ansteuerung der Elektromotoren der Futtermittel-Ausgabeeinrichtungen ermöglicht, wobei als Basis für die jeweilige Stellgröße die kontinuierlich oder von Zeit zu Zeit erfasste Gewichtsänderung der im jeweils zugeordneten Dosierbehältnis befindlichen Futtermittelmenge herangezogen wird. Den einzelnen Dosierbehältnissen ist zu diesem Zweck jeweils eine Waage zugeordnet, die signaltechnisch mit dem Regler kommuniziert. Es besteht somit die Möglichkeit, die Ausgaberate der einzelnen Futtermittel-Ausgabeeinrichtungen während des Fütterungsbetriebes der Fütterungsanlage automatisch zu überprüfen und bei Bedarf auch automatisch eventuell erforderliche Korrekturen vorzunehmen. Es kann dadurch gewährleistet werden, dass störende Faktoren wie eine veränderte Futtermittelqualität oder Witterungseinflüsse kompensiert werden, um eine gleichbleibend hohe Genauigkeit in der Bereitstellung der gewünschten Futtermenge des gewünschten Mischungsverhältnisses zu erzielen. Durch die kontinuierlich oder von Zeit zu Zeit stattfindenden Kontrollwiegungen kann verifiziert werden, ob die entsprechend den technischen Daten der Futtermittel-Ausgabeeinrichtungen und der Elektromotoren zu erwartenden Futtermittel-Ausgaberaten den tatsächlichen Gegebenheiten entsprechen, wobei eventuell auftretende Abweichungen durch die vorhandene Regelung umgehend korrigiert werden können. Vorteilhaft ist ferner, dass die erforderlichen Kontrollwiegungen zur Gewichtsbestimmung ohne Unterbrechung des Fütterungsbetriebes möglich sind, was einen rationellen Fütterungsvorgang gewährleistet.

Ein ununterbrochener Fütterungsbetrieb ist bei der bekannten Fütterungsanlage allerdings nur so lange möglich, wie sich in den Dosierbehältern noch eine ausreichende Menge an Futtermittel befindet. Man wird daher die Größe der Dosierbehälter am Umfang der zu versorgenden Futterstellen orientieren. Dadurch kann mit der Fütterungsanlage auf jeden Fall eine komplette Mahlzeit an die vorhandenen Tiere verfüttert werden. Bei grösser werdenden Stallanlagen können allerdings die notwendigen Dimensionen für die Dosierbehältnisse und die Waagen nicht mehr vernünftig realisiert werden. Einerseits stehen Platzprobleme entgegen, andererseits führt eine zunehmende Größe der Komponenten zu einer überproportionalen Erhöhung der Kosten und insbesondere auch zu einer Abnahme der Genauigkeit der einzusetzenden Wiegetechnik. Somit ist es bei großen Stallanlagen notwendig, den Fütterungsvorgang von Zeit zu Zeit zu unterbrechen, um die Dosierbehältnisse aus vorhandenen Vorratssilos wieder aufzufüllen. Diese Betriebsunterbrechung verlängert nicht nur den Fütterungsvorgang, sondern führt oft auch zu einer problematischen Unruhe unter den zu fütternden Tieren.

Der Erfindung liegt die Aufgabe zugrunde, ein System zu schaffen, das unabhängig von Betriebsgröße und notwendiger Futtermenge der einzelnen Futtermittel bei hoher Dosiergenauigkeit einen kontinuierlichen Fütterungsvorgang ermöglicht.

Um diese Aufgabe zu lösen, ist bei einer Fütterungsanlage der eingangs genannten Art vorgesehen, dass die Steuereinrichtung ausgebildet ist, um ein Nachfüllen mit Futtermittel der durch Kontrollwiegungen hinsichtlich ihrer Gewichtsänderung überwachbaren Dosierbehältnisse bei laufendem Futtermittel-Ausgabevorgang zu bewirken, wobei die bei laufendem Futtermittel-Ausgabevorgang stattfindenden Nachfüllvorgänge mit Überwachungspausen einhergehen, während denen die bezüglich des jeweils zugeordneten Dosierbehältnisses auftretenden Gewichtsänderungen bei der Bestimmung der Stellgröße des zugeordneten Elektromotors unberücksichtigt bleiben.

Die Aufgabe wird ferner bei einem Verfahren der eingangs genannten Art dadurch gelöst, dass das Nachfüllen mit Futtermittel der durch Kontrollwiegungen hinsichtlich ihrer Gewichtsänderung überwachten Dosierbehältnisse bei laufendem Futtermittel-Ausgabevorgang durchgeführt wird, wobei während den Nachfüllvorgängen die bezüglich des jeweils zugeordneten Dosierbehältnisses auftretenden Gewichtsänderungen bei der Bestimmung der Stellgröße des zugeordneten Elektromotors unberücksichtigt bleiben.

Auf diese Weise besteht die vorteilhafte Möglichkeit, die Dosierbehältnisse ohne Unterbrechung eines laufenden Fütterungsbetriebes nachzufüllen. Bedingt durch diese Möglichkeit können die Dosierbehältnisse und die diesen zugeordneten Waagen in einer vernünftigen Größe dimensioniert werden, um eine kostengünstige Herstellung bei gleichzeitig präziser Betriebsweise zu gewährleisten.

Bei der Fütterungsanlage und dem Verfahren wird während der normalen Betriebszeiten eine kontinuierliche oder intervallweise Überwachung der Ausgabemengen an Futtermittel durchgeführt, indem Kontrollwiegungen der mit Futtermittel befüllten Dosierbehältnisse durchgeführt werden. Das Ergebnis dieser Kontrollwiegungen wirkt sich auf die Stellgröße der Elektromotoren der Futtermittel-Ausgabeeinrichtungen aus. Ein Nachfüllen der Dosierbehältnisse im laufenden Fütterungsbetrieb ohne besondere Maßnahmen würde zu Fehlsignalen führen, was wiederum fehlerhafte Futtermittelausgaberaten zur Folge hätte. Erfindungsgemäß ist ein Nachfüllen der Dosierbehältnisse trotz laufendem Fütterungsbetrieb möglich, weil während des Nachfüllens der Dosierbehältnisse Überwachungspausen eingelegt und die während des Nachfüllens auftretenden Gewichtsänderungen bei der Generierung der Stellgrößen für die Elektromotoren nicht berücksichtigt werden. Die Elektromotoren laufen also während jedes Nachfüllvorganges kurzzeitig unüberwacht und insbesondere auf der Basis der zuvor ermittelten Stellgrößen weiter, was sich auf die Dosierungsqualität jedoch nicht merklich niederschlägt, weil kurzzeitige Veränderungen im Verhältnis zwischen Drehzahl und Ausgabemenge sowieso eher kaum gegeben sind. Dementsprechend wirkt sich die Überwachungspause während eines Nachfüllvorganges auf die erzielbare Mischungsqualität des Futtermittels nicht relevant aus.

Jedes individuell überwachte und gewogene Dosierbehältnis kann entsprechend des Futtermittelverbrauches individuellen Überwachungspausen ausgesetzt sein, die mit einem gleichzeitigen Nachfüllen mit Futtermittel einhergehen. Nach Abschluss des Nachfüllvorganges endet die Überwachungspause und die Kontrollwiegungen werden wieder aufgenommen.

Somit werden durch die erfindungsgemäße Fütterungsanlage und das erfindungsgemäße Verfahren eine gewünschte individuelle Fütterung und damit notwendige Mischungsgestaltung an Futtermittel auch dann nicht unterbrochen, wenn eine große Menge an Futtermittel zu verteilen ist, die sich durch ein einmaliges Befüllen der Dosierbehältnisse nicht bewältigen lässt. Nur die Überwachungsfunktion hinsichtlich der korrekten Ausgaberate des Futtermittels ist kurzzeitig außer Funktion. Einer exakten Ausgabe der gewünschten Futtermittelmengen tut dies jedoch keinen Abbruch.

Vorteilhafte Weiterbildungen der Erfindung gehen aus den Unteransprüchen hervor.

Während der Überwachungspausen werden zweckmäßigerweise überhaupt keine Kontrollwiegungen vorgenommen. Bei der Fütterungsanlage können für diesen Zweck die Waagen während den Überwachungspausen durch die Steuereinrichtung deaktiviert werden, so dass sie kein Wiegesignal an die Steuereinrichtung übermitteln. Eine alternative Art der Nichtberücksichtigung von während der Nachfüllvorgänge auftretenden Gewichtsänderungen besteht darin, die Wiegeprozesse zwar weiterzuführen, jedoch die generierten Wiegesignale nicht regelungstechnisch zu verarbeiten.

Die Steuereinrichtung ist zweckmäßigerweise dahingehend ausgebildet, dass sie einen von einer Überwachungspause begleiteten Nachfüllvorgang aktiviert, wenn die Füllmenge des jeweils zugeordneten Dosierbehältnisses auf einen unteren Füllgrenzwert abgesunken ist. Der untere Füllgrenzwert kann beispielsweise durch einen Füllstandsmesser überwacht werden. Als vorteilhafter wird es jedoch angesehen, als unteren Füllgrenzwert einen Gewichtsgrenzwert heranzuziehen, der in einem Vergleicher der Steuereinrichtung mit den bei den Kontrollwiegungen sowieso bestimmten Gewichtsdaten vergleichbar ist. Ergibt sich bei einer Kontrollwiegung ein Gewicht, dass den Gewichtsgrenzwert erreicht oder gar unterschritten hat, wird eine Überwachungspause hervorgerufen und gleichzeitig oder bei Bedarf auch zeitverzögert der Nachfüllvorgang initiiert.

Zweckmäßigerweise wird jedes Dosierbehältnis aus einem ihm individuell zugeordneten Nachfüllbehältnis nachgefüllt. Die Fütterungsanlage verfügt dementsprechend zweckmäßigerweise pro kontrolliertem Dosierbehältnis über ein diesem Dosierbehältnis individuell zugeordnetes Nachfüllbehältnis. In dem Nachfüllbehältnis wird eine Futtermittel-Nachfüllmenge bereitgestellt, die bei einem von einer Überwachungspause begleiteten Nachfüllvorgang in das zugeordnete Dosierbehältnis umgefüllt wird. Dieses Umfüllen findet zweckmäßigerweise in kürzester Zeit statt, indem beispielsweise die Nachfüllbehältnisse oberhalb der Dosierbehältnisse angeordnet und durch einen zum Nachfüllen leicht zu öffnenden Schieber verschlossen sind.

Nach Beendigung des Nachfüllvorganges wird das nun entleerte Nachfüllbehältnis wieder aufgefüllt. Hierzu ist jedem Nachfüllbehältnis zweckmäßigerweise ein eigenes Vorratsbehältnis zugeordnet, insbesondere ein Vorratssilo, in dem eine große Menge an Futtermittel bevorratet wird und aus dem jeweils Teilmengen zur Wiederbefüllung eine Nachfüllbehältnisses entnommen werden. Der Wiederauffüllvorgang wird zweckmäßigerweise durch die Steuereinrichtung initiiert, nachdem der Nachfüllvorgang und mithin die Überwachungspause beendet ist.

Die Dauer der Überwachungspausen wird zweckmäßigerweise rein zeitgesteuert durch die Steuereinrichtung vorgegeben. Die Zeitdauer der Überwachungspausen kann sich dabei an der zuvor empirisch ermittelten Entleerungsdauer orientieren, die verstreicht, bis ein Nachfüllbehältnis beim Nachfüllen eines zugeordneten Dosierbehältnisses entleert ist. Eine hierfür typische Zeitspanne kann beispielsweise im Bereich von 10 sec liegen. Auf diese Weise erspart man sich eine aufwendige und oft störungsbehafete Füllstandsüberwachung seitens der Dosierbehältnisse und der Nachfüllbehältnisse. Zweckmäßigerweise wird auch das Wiederauffüllen der entleerten Nachfüllbehältnisse rein zeitlich gesteuert. So kann der Wiederauffüllvorgang beispielsweise gestartet werden, nachdem die für die Überwachungspause veranschlagte Zeitdauer verstrichen ist. Der Wiederbefüllvorgang der Nachfüllbehältnisse wird zweckmäßigerweise durch einen Füllstandsdetektor überwacht und bei Erreichen der gewünschten maximalen Füllhöhe abgebrochen.

Indem die Fördergeschwindigkeit für den Wiederbefüllvorgang der Nachfüllbehältnisse erheblich größer gewählt wird als diejenige der Futtermittel-Ausgabeeinrichtungen, steht zwischen zwei aufeinanderfolgenden Überwachungspausen bzw. Nachfüllvorgängen stets genügend Zeit zur Verfügung, um ein Nachfüllbehältnis wieder aufzufüllen.

Ein weiterer technisch und wirtschaftlich positiver Effekt in Bezug auf Genauigkeit als auch Kostenreduzierung besteht darin, dass durch die erfindungsgemäßen Maßnahmen nicht nur kleinere, sondern auch einheitlich gestaltete Dosiereinheiten realisiert werden können.

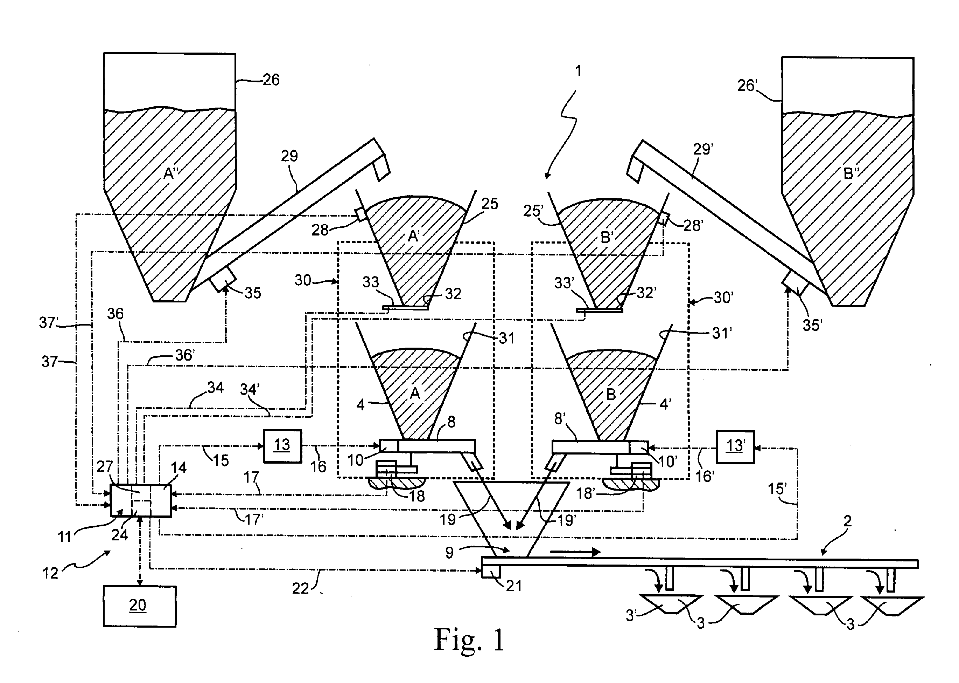

Nachfolgend wird die Erfindung anhand der beiliegenden Zeichnung näher erläutert. Die einzige Figur (Figur 1) zeigt in schematischer Darstellung eine bevorzugte Ausführungsform der erfindungsgemäßen Fütterungsanlage.

Die abgebildete Fütterungsanlage lässt sich im Rahmen der Tierhaltung insbesondere in einem landwirtschaftlichen Betrieb verwenden. Sie umfasst eine Zubereitungsstation 1, in der tierspezifische, also auf den Bedarf der zu fütternden Tiere abgestellte Futtermittelmischungen zubereitet werden. Diese Futtermittelmischungen werden über eine Fördereinrichtung 2 zu ausgewählten Futterstellen 3 gefördert.

Beim Ausführungsbeispiel sind vier Futterstellen 3 abgebildet, denen unterschiedliche Futtermittelmischungen zuzuführen sind, wobei sich die Futtermittelmischungen in der jeweiligen Gesamtmenge und im Mischungsverhältnis der darin enthaltenen Futtermittel unterscheiden können.

In der Zubereitungsstation 1 befinden sich mindestens ein und zweckmäßigerweise mehrere Dosierbehältnisse 4, 5, von denen der Übersichtlichkeit halber nur zwei Stück abgebildet sind. In jedem Dosierbehältnis 4, 5 befindet sich eine bestimmte Menge eines beliebigen Futtermittels A, B, beispielsweise Getreide oder sonstige fließ- oder schüttfähige Mittel.

Jedem Dosierbehältnis 4, 5 ist eine elektromotorisch betätigte Futtermittel-Ausgabeeinrichtung 8, 8' zugeordnet. Diese ist beim Ausführungsbeispiel in Baueinheit mit dem jeweils zugehörigen Dosierbehältnis 4, 5 ausgeführt. Die Futtermittel-Ausgabeeinrichtungen 8, 8' ermöglichen die Ausgabe von Futtermittel A, B aus den Dosierbehältnissen 4, 5 zu einer Ausgabestelle 9, wobei beim Ausführungsbeispiel allen Futtermittel-Ausgabeeinrichtungen 8, 8' eine gemeinsame Ausgabestelle 9 zugeordnet ist.

Jede Futtermittel-Ausgabeeinrichtung 8, 8' enthält nicht näher dargestellte Ausgabemittel, beispielsweise ein oder mehrere Förderschnecken oder Förderbänder, die durch einen zugeordneten Elektromotor 10, 10' betätigt werden. Die Ausgaberate an Futtermittel, also die pro Zeiteinheit ausgegebene Futtermittelmenge, hängt von der momentanen Motordrehzahl des jeweiligen Elektromotors 10, 10' ab. Der Futtermittel-Ausgabevorgang ist in der Zeichnung durch Pfeile 19, 19' angedeutet.

Den Elektromotoren 10, 10' der Futtermittel-Ausgabeeinrichtungen 8, 8' ist gemeinsam eine elektronische Steuereinrichtung 12 zugeordnet, die eine derartige Beeinflussung der Motordrehzahlen ermöglicht, dass eine gleichzeitige Futtermittel-Ausgabe unterschiedlicher variabler Ausgaberaten der einzelnen Futtermittel-Ausgabeeinrichtungen 8, 8' erfolgt. Durch die Steuereinrichtung 12 lassen sich die Ausgaberaten der verschiedenen Futtermittel-Ausgabeeinrichtungen, also die pro Zeiteinheit ausgegebene Futtermittelmenge (z. B. kg/min), unabhängig voneinander und jeweils bedarfsgemäß variabel einstellen.

Die beispielsgemäße Fütterungsanlage sieht in bevorzugter Ausgestaltung eine drehzahlgeregelte Ansteuerung der Elektromotoren 10, 10' durch die Steuereinrichtung 12 vor. Auf diese Weise kann gegenüber den gewünschten Soll-Ausgaberaten auftretenden Abweichungen durch entsprechende Korrektur der Motordrehzahl des betreffenden Elektromotors Rechnung getragen werden. Dies gewährleistet eine gleichbleibende Zubereitungsgenauigkeit der Futtermittelmischungen, unabhängig von Störungseinflüssen wie einem feuchtigkeitsabhängigen Förderverhalten der Futtermittel.

Bei den Elektromotoren 10, 10' des Ausführungsbeispiels handelt es sich um solche, deren Drehzahl frequenzabhängig einstellbar ist. Es kann sich insbesondere um Drehstrommotoren handeln. Jedem dieser Elektromotoren 10, 10' ist ein eigener Frequenzgenerator 13, 13' zugeordnet, der zwischen den betreffenden Elektromotor 10, 10' und einen Regler 14 der Steuereinrichtung 12 zwischengeschaltet ist. Der Regler 14 speist die zugeordneten Frequenzgeneratoren 13, 13' unabhängig voneinander mit einer spezifischen Stellgröße 15, 15' auf Basis derer im angeschlossenen Frequenzgenerator 13, 13' eine Ausgangsfrequenz erzeugt wird, auf Basis derer wiederum der zugeordnete Elektromotor 10, 10' mit einem eine zugehörige Motordrehzahl vorgebenden Steuersignal 16, 16' angesteuert wird. Die vom jeweiligen Frequenzgenerator 13, 13' erzeugte Ausgangsfrequenz ist variabel und hängt von der anliegenden Stellgröße 15, 15' ab.

Als Regelgröße 17, 17' für die Drehzahlregelung wird die Gewichtsänderung des im jeweiligen Dosierbehältnis 4, 4' befindlichen Futtermittels A, B herangezogen, die während eines Ausgabevorganges innerhalb einer gewissen Zeitspanne auftritt. Hierzu ist beim Ausführungsbeispiel jede aus einem Dosierbehältnis 4, 4' und einer Futtermittel-Ausgabeeinrichtung 8, 8' bestehende Baueinheit mit einer Waage 18, 18' gekoppelt, mit der sich die bei der Futtermittel-Ausgabe auftretende Gewichtsreduzierung ermitteln lässt. Ein kontinuierlicher Wiegevorgang wäre denkbar, beim Ausführungsbeispiel erfolgt von Zeit zu Zeit in vorzugsweise sehr kurzen und/oder regelmäßigen Zeitabständen eine Kontrollwiegung, die unter Berücksichtigung des zwischen zwei Messungen verstrichenen Zeitraumes die Ermittlung der tatsächlichen Ist-Ausgaberate ermöglicht, die als Regelgröße 17, 17' dem Regler 14 zugeführt wird, der darauf aufbauend die Stellgrößen 15, 15' erzeugt.

Nachfolgend wird beispielhaft ein möglicher Verfahrensablauf einer Fütterungsfolge erläutert, wobei davon ausgegangen wird, dass Futtermittelmischungen aus zwei in zugehörigen Dosierbehältnissen 4, 4' gespeicherten, unterschiedlichen Futtermitteln A, B zubereitet werden sollen. Es sei ferner unterstellt, dass die Ausgabeleistung der Futtermittel-Ausgabeeinrichtungen bei einer Ansteuerung mit einer Ausgangsfrequenz von 50 Hz 20 kg/ min (= 0,333 kg/sec) beträgt. Es sei ferner davon ausgegangen, dass sich die gemeinsame Ausgabestelle 9 für die unterschiedlichen Futtermittel unmittelbar in der Fördereinrichtung 2 befindet, sodass also die Futtermittel-Ausgabe direkt in die Fördereinrichtung 2 erfolgt, die sich dabei im Förderbetrieb befindet. In die Fördereinrichtung 2 zugeführtes Futtermittel wird also praktisch kontinuierlich zur zugeordneten Futterstelle 3 abgefördert. Da die Futtermittel-Ausgabe zu einer gemeinsamen Ausgabestelle 9 erfolgt, können sich die einzelnen Futtermittel A, B während der Ausgabe untereinander vermischen, sodass die einzelnen Futtermittel bereits als untereinander vermengte Futtermittelmischung in die Fördereinrichtung 2 gelangen. Dadurch kann eine separate Mischvorrichtung bzw. ein separater Anmischbehälter entfallen.

Um einen optimalen Betrieb zu erzielen, ist ferner vorgesehen, dass die Ausgaberaten der einzelnen Futtermittel-Ausgabeeinrichtungen 8, 8' derart aufeinander abgestimmt sind, dass die daraus resultierende Gesamtrate an zubereiteter und in die Fördereinrichtung 2 zugeführter Futtermittelmischung zumindest im wesentlichen der Förderrate der Fördereinrichtung 2 entspricht. Dadurch wird erreicht, dass die pro Zeiteinheit zugeführte und abgeförderte Menge an Futtermittelmischung im wesentlichen gleich ist, wobei man sich zweckmäßigerweise an der maximalen Förderleistung der Fördereinrichtung 2 orientiert, um die vorhandene Förderkapazität optimal auszunutzen.

Bei dem vorliegend beispielhaft beschriebenen Fütterungsablauf sei unterstellt, dass die Förderleistung der Fördereinrichtung 30 kg/min (= 0,5 kg/sec) beträgt. Die Ausgaberate an Futtermittel wird daran angepasst.

Es sei nun angenommen, dass einer zur besseren Unterscheidung ergänzend mit 3' bezeichneten ersten Futterstelle 3 eine Futtermittelmischung mit einem Gesamtgewicht von 50 kg und aus einem Mischungsverhältnis von 60% Futtermittel A und 40% Futtermittel zugeführt werden soll.

Unter optimaler Ausnutzung der Förderleistung der Fördereinrichtung 2 erfordern die 50 kg Futtermittelmischung eine Abförderdauer in der Fördereinrichtung 2 von 100 sec.

Um zu gewährleisten, dass die erzeugte Futtermittelmischung während der gesamten Zeitdauer ihrer Erzeugung über das gewünschte Mischungsverhältnis 60 : 40 verfügt, erfolgt über die Steuereinrichtung 12 eine derartige Ansteuerung der Elektromotoren 10, 10', dass der geforderte Mengenanteil des betreffenden Futtermittels über den Abförderzeitraum (100 sec) gleichmäßig verteilt ausgegeben wird. Dadurch erfolgt unabhängig vom vorgegebenen Mischungsverhältnis eine sich zumindest in etwa über den gleichen Zeitraum erstreckende Futtermittel-Ausgabe sämtlicher Futtermittel-Ausgabeeinrichtungen 8, 8'. Während der Ausgabe erfolgt eine kontinuierliche Mischung, sodass das Mischungsverhältnis innerhalb der gesamten hergestellten Futtermittelmischung annähernd konstant ist.

Unter Berücksichtigung der beim vorliegenden Ausführungsbeispiel zugrundegelegten Vorgaben ergibt sich für Futtermittel A eine Ausgaberate von 0,30 kg/sec und für Futtermittel B eine Ausgaberate von 0,10 kg/sec.

Um diese Ausgaberaten zu verwirklichen, werden den einzelnen Elektromotoren 10, 10' über die zugeordneten Frequenzgeneratoren 13, 13' die zugehörigen Ausgangsfrequenzen zugeleitet. Auf der Basis einer Ausgabeleistung von 0,333 kg/sec bei 50 Hz ergibt sich dabei für das Futtermittel A eine Ausgangsfrequenz von 40,05 Hz und für das Futtermittel B eine Ausgangsfrequenz von 30,03 Hz.

Die Vorgabe des gewünschten Mischungsverhältnisses und der gewünschten Menge der zuzubereitenden Futtermittelmischung geschieht beim Ausführungsbeispiel mittels einer geeigneten Eingabeeinrichtung 20 der Steuereinrichtung 12. Die Eingabeeinrichtung 20 kommuniziert mit einer den Regler 14 enthaltenden elektronischen Steuereinheit 11 und ermöglicht außerdem die Eingabe der Förderleistung der Fördereinrichtung 2 und der beim Ausführungsbeispiel auf eine Frequenz von 50 Hz bezogenen Ausgabeleistung der Futtermittel-Ausgabeeinrichtungen 8, 8'. Die entsprechenden Daten können aber auch in einem geeigneten Speicher 24 der Steuereinheit 11 abgelegt sein.

Der Ausgabevorgang sämtlicher Futtermittel-Ausgabeeinrichtungen 8, 8' auf Basis der ermittelten Ausgangsfrequenzen erfolgt zeitgleich. Nachdem eine gewisse Zeitdauer verstrichen ist, die weniger als die vorgesehene Ausgabezeit von 100 sec beträgt, wird über die vorhandenen Waagen 18, 18' eine einmalige oder mehrmalige Kontrollwiegung vorgenommen und dadurch die tatsächliche Ausgaberate als Ist-Ausgaberate festgestellt. Diese geht als Regelgröße 17, 17' in den Regler 14 ein, der eine Stellgröße 15, 15' erzeugt, auf Basis derer die Frequenzgeneratoren 13, 13' die Ausgangsfrequenzen zumindest für den Zubereitungsvorgang der nächsten Futtermittelmischung so modifizieren, dass sich eine zur Erzeugung der gewünschten Soll-Ausgaberate geeignete modifizierte Motordrehzahl einstellt.

Beim aktuellen Zubereitungsvorgang kann entsprechend dem Ergebnis der Kontrollwiegungen durch vorzeitiges oder verzögertes Abbrechen des Ausgabevorganges die exakte Einzelmenge ausdosiert werden, ohne die Ausgangsfrequenz zu verändern. Allerdings wäre es ohne weiteres möglich, schon während des aktuellen Zubereitungsvorganges derart auf die Motordrehzahlen einzuwirken, dass alle Ausgabevorgänge zur gleichen Zeit beendet werden. Die Genauigkeit des erzielbaren Mischungsverhältnisses lässt sich dadurch vergrößern, dass beim Zubereitungsvorgang einer Futtermittelmischung mehrere, zeitlich aufeinanderfolgende Erfassungsvorgänge bezüglich der Gewichtsänderungen vorgenommen und dementsprechend die Motordrehzahlen sofort entsprechend aktualisiert werden. Das System ist überaus variabel, weil die elektronische Steuereinrichtung 12 eine einem vorgegebenen Mischungsverhältnis der zuzubereitenden Futtermittelmischung entsprechende, voneinander unabhängige Ansteuerung der Elektromotoren 10, 10' der verschiedenen Futtermittel-Ausgabeeinrichtungen 8, 8' ermöglicht.

Die Fördereinrichtung 2 kann von konventionellem Aufbau sein und über beispielsweise als Schnecken, Spiralen, Förderseile, Förderketten, Förderbänder, Gebläse oder Pumpen ausgebildete Fördermittel verfügen. Sie ermöglicht je nach Ausgestaltung die Förderung fester oder flüssiger Futtermittelmischungen.

Vorzugsweise sind nicht weiter abgebildete Mittel vorhanden, die ein Erfassen und/oder Einstellen der Fördermenge pro Zeiteinheit der Fördereinrichtung 2 ermöglichen. Die Fördereinrichtung 2 ist mit Antriebsmitteln 21 ausgestattet, deren Betätigung zweckmäßigerweise durch die elektronische Steuereinrichtung 12 und insbesondere deren elektrische Steuereinheit 11 gesteuert wird. In diesem Zusammenhang ist bei 22 exemplarisch eine entsprechende Steuerleitung angedeutet. Die Fütterungsanlage ermöglicht einen zumindest annähernd unterbrechungsfreien Transport von Futtermittelmischungen in individuellen Mengen und Mischungsverhältnissen zu jeder gewünschten Futterstelle 3. Die Ausgabemengen der Futtermittel-Ausgabeeinrichtungen 8, 8' werden drehzahlgesteuert und insbesondere drehzahlgeregelt nach Menge pro Zeiteinheit eingestellt und können von Zeit zu Zeit oder kontinuierlich über die vorhandenen Wiegeeinrichtungen 18, 18' kontrolliert und justiert werden. Die verschiedenen Futtermittel-Einzelkomponenten A, B können gleichzeitig im vorgewählten Mischungsverhältnis direkt in die Fördereinrichtung 2 eingespeist werden. Ist die jeweilige Ausgaberate der Futtermittel-Ausgabeeinrichtungen 8, 8' bekannt, kann durch Addition die Gesamtmenge für die einzelnen Futterstellen vorbestimmt und ausgegeben werden. Im Umkehrschluss wird die jeweils gewünschte Futtermittelmischung in Mischung und Menge/Zeiteinheit durch die Ausgabemenge der einzelnen Futtermittel hergestellt.

Als Frequenzgeneratoren werden zweckmäßigerweise Frequenzumrichter verwendet, die zweckmäßigerweise über die Möglichkeit einer proportionalen Frequenzverstellung verfügen.

Die Fütterungsanlage kann auch derart ausgebildet sein, dass nur einige der zu mischenden Futtermittel und hierbei vor allem die Hauptkomponenten über elektromotorisch und dabei vorzugsweise drehzahlgeregelt angesteuerte Futtermittel-Ausgabeeinrichtungen ausgegeben werden. Im Mischungsverhältnis eher untergeordnete Komponenten, insbesondere flüssiger Art, z.B. Wasser, könnten auch ohne Nachregelung bzw. Erfassung einer Gewichtsänderung ausgegeben werden, beispielsweise allein durch Vorgabe einer bestimmten Durchflussmenge mittels einstellbaren Ventilen.

Die Fütterungsanlage ist mit besonders vorteilhaften Maßnahmen ausgestattet, die eine kontinuierliche Futtermittelausgabe auch bei großem Futtermittelverbrauch ermöglichen, wie er vor allem bei großen Stallanlagen mit vielen Futterstellen 3 auftritt.

Zu diesen Maßnahmen gehören zunächst mehrere Nachfüllbehältnisse 25, 25', die ein Bestandteil der Fütterungsanlage sind, wobei jedem Dosierbehältnis 4, 4' individuell ein eigenes Nachfüllbehältnis 25, 25' zugeordnet ist. Die einander paarweise zugeordneten Dosierbehältnisse und Nachfüllbehältnisse 4, 25; 4', 25' bilden zweckmäßigerweise jeweils eine Dosiereinheit 30, 30'.

Jedes Nachfüllbehältnis 25, 25' ist dazu bestimmt, eine Futtermittel-Nachfüllmenge A', B' aufzunehmen, die ihrerseits dazu bestimmt ist, das zugeordnete Dosierbehältnis 4, 4' erneut zu befüllen, wenn das darin bevorratete Futtermittel A, B zur Neige geht.

Exemplarisch ist in jeder Dosiereinheit 30, 30' das Nachfüllbehältnis 25, 25' über dem zugeordneten Dosierbehältnis 4, 4' angeordnet, wobei das Dosierbehältnis 4, 4' eine nach oben weisende Einfüllöffnung 31, 31' aufweist - beispielsweise eine Trichteröffnung -, oberhalb derer sich eine nach unten weisende Entleeröffnung 32, 32' des darüber angeordneten Nachfüllbehältnisses 25, 25' befindet. Der Entleeröffnung 32, 32' ist ein Verschlussmittel 33, 33' zugeordnet, das beispielsweise als Verschlussschieber ausgebildet ist und das wahlweise in einer die Entleeröffnung 32, 32' verschließenden Schließstellung oder in einer die Entleeröffnung 32, 32' freigebenden Offenstellung positionierbar ist. Die Stellung der Verschlussmittel 33, 33' ist über elektrische Steuerleitungen 34, 34' durch die elektronische Steuereinheit 11 steuerbar.

Während die Dosierbehältnisse 4, 4' unter Vermittlung der schon erwähnten Waagen 18, 18' an einer beispielsweise rahmenartigen Grundstruktur der Dosiereinheit 30, 30' aufgehängt sind, sind die Nachfüllbehältnisse 25, 25' an dieser Grundstruktur starr befestigt, so dass sich ihre Füllmenge bzw. ihr Gewicht nicht auf das Wiegeergebnis der Waagen 18, 18' auswirkt.

Jedes Nachfüllbehältnis 25, 25' ist mit einem Füllstandsdetektor 28, 28' ausgestattet, der in der Lage ist, einen maximalen Füllstand der Futtermittel-Nachfüllmenge A', B' zu detektieren.

Jedem Nachfüllbehältnis 25, 25' ist ein eigenes Vorratsbehältnis 26, 26' zugeordnet, das beispielsweise als Vorratssilo ausgebildet ist und dessen maximales Füllvolumen größer ist als dasjenige des zugeordneten Nachfüllbehältnisses 25, 25'. In jedem Vorratsbehältnis 26, 26' befindet sich eine Futtermittel-Vorratsmenge A", B".

Jedem Vorratsbehältnis 26, 26' ist eine elektrisch gesteuerte bzw. betätigbare Wiederauffüllvorrichtung 29, 29' zugeordnet, mit deren Hilfe Teilmengen der Futtermittel-Vorratsmenge A", B" in das zugeordnete Nachfüllbehältnis 25, 25' umfüllbar sind. Die Wiederauffüllvorrichtungen 29, 29' können in vergleichbarer Weise wie die Futtermittel-Ausgabeeinrichtungen 8, 8' konzipiert sein und enthalten beim Ausführungsbeispiel zweckmäßigerweise eine nicht weiter abgebildete, in einem Förderrohr laufende Förderschnecke, die durch eine elektrische Antriebseinrichtung 35, 35', insbesondere in Gestalt eines Elektromotors, antreibbar ist. Jede Wiederauffüllvorrichtung 29, 29' und insbesondere deren elektrische Antriebseinrichtung 35, 35' ist über eine elektrische Steuerleitung 36, 36' mit der elektronischen Steuereinheit 11 steuerungstechnisch verbunden.

Die oben erwähnten Füllstandsdetektoren 28, 28' sind über Rückmeldeleitungen 37, 37' zweckmäßigerweise ebenfalls an die elektronische Steuereinheit 11 angeschlossen.

Die Steuereinrichtung 12 und insbesondere deren elektronische Steuereinheit 11 ist dahingehend ausgebildet, dass sie bei laufendem Futtermittel-Ausgabevorgang der Futtermittel-Ausgabeeinrichtungen 8, 8' ein Nachfüllen der Dosierbehältnisse 4, 4' mit Futtermittel hervorrufen können. Es ist also nicht erforderlich, die Futtermittelausgabe aus den Dosierbehältnissen 4, 4' während deren Nachbefüllen zu unterbrechen. Wesentlich ist dabei, dass während jedes Nachfüllvorganges die dabei bezüglich des jeweils zugeordneten Dosierbehältnisses 4, 4' auftretenden Gewichtsänderungen bei der Bestimmung der für den zugeordneten Elektromotor 10, 10' bestimmten Stellgröße 15, 15' nicht berücksichtigt werden. Während einer Nachfüllphase eines Dosierbehältnisses 4, 4' wird die diesem zugeordnete Futtermittelausgabe also nicht wiegetechnisch überwacht, so dass von einer Überwachungspause gesprochen werden kann.

Exemplarisch wird die Nichtberücksichtigung der Gewichtsänderungen dadurch realisiert, dass die Waagen 18, 18' während der Überwachungspausen durch die Steuereinrichtung 12 und insbesondere deren elektronische Steuereinheit 11 deaktiviert sind. Sie geben also während der Überwachungspause kein Wiegesignal als Regelgröße an den Regler 14 aus.

Eine andere Möglichkeit der Nichtberücksichtigung der Gewichtsänderungen besteht darin, die Waagen zwar aktiviert zu lassen, jedoch das von ihnen ausgegebene Wiegesignal innerhalb der Steuereinheit 11 nicht zu verarbeiten und insbesondere dem Regler 14 nicht als Regelgröße zuzuführen.

Indem die während einer Nachfüllphase auftretenden Gewichtsänderungen und insbesondere auch Gewichtsschwankungen nicht für die Ansteuerung der Futtermittel-Ausgabeeinrichtungen 8, 8' verwendet werden, erhalten selbige keine unerwünschten Störsignale, sondern können unverändert auf der Basis der vor dem Beginn einer Überwachungspause geltenden Stellgrößen 15, 15' weiterbetrieben werden. Da die Überwachungspause in Verbindung mit einem schnellen Nachfüllen des zugeordneten Dosierbehältnisses 4, 4' sehr kurz ausfallen kann, wirkt sich der fehlende Überwachungszeitraum auf die Genauigkeit der Futtermitteldosierung nicht nachteilig aus.

Exemplarisch ist die Steuereinrichtung 12 und insbesondere die elektronische Steuereinheit 11 dahingehend ausgebildet, dass sie jeweils einen mit einer Überwachungspause zweckmäßigerweise zeitgleich gekoppelten Nachfüllvorgang eines Dosierbehältnisses 4, 4' initiiert, wenn die Füllmenge in dem betreffenden Dosierbehältnis 4, 4' einen unteren Füllgrenzwert erreicht hat.

Der untere Füllgrenzwert ist zweckmäßigerweise ein Gewichtsgrenzwert, dessen Einhaltung sich unter Verwendung der sowieso vorhandenen Waagen 18, 18' im laufenden Betrieb der Fütterungsanlage problemlos überwachen lässt. Als Füllgrenzwert wird zweckmäßigerweise ein Wert angesetzt, bei dem mindestens noch soviel Futtermittel A, B im zugeordneten Dosierbehältnis 4, 4' vorhanden ist, dass während eines sich anschließenden Nachfüllvorganges ein uneingeschränkter und ungestörter Futtermittel-Ausgabevorgang 19, 19' gewährleistet werden kann.

Prinzipiell wäre es auch möglich, den unteren Füllgrenzwert beispielsweise mit Hilfe eines Füllstandsdetektors zu überwachen.

Die elektronische Steuereinheit 11 ist mit einem Speicher 24 und einem Vergleicher 27 ausgestattet. In dem Speicher 24 ist der untere Füllgrenzwert elektrisch abspeicherbar, wobei er zweckmäßigerweise variabel mit Hilfe der Eingabeeinrichtung 20 eingebbar ist. In dem Vergleicher 27 erfolgt ein Vergleich der Ist-Werte mit dem gespeicherten Füllgrenzwert, wobei ein Nachfüllvorgang mit paralleler Überwachungspause initiiert wird, sobald der Ist-Wert den unteren Füllgrenzwert erreicht oder unterschritten hat.

Exemplarisch äußert sich das erwähnte Vergleichsergebnis darin, dass der durch die zugeordnete Waage 18 oder 18' bis dahin ausgeführte Wiegevorgang unterbrochen und insbesondere gleichzeitig das bis dahin geschlossene Verschlussmittel 33, 33' des über dem zu befüllenden Dosierbehältnis 4, 4' angeordneten Nachfüllbehältnisses 25, 25' in die Offenstellung bewegt wird.

Somit entleert sich das Nachfüllbehältnis 25, 25' in das darunter angeordnete Dosierbehältnis 4, 4'. Dieser Entleervorgang und der damit zeitgleich einhergehende Nachfüllvorgang des zugeordneten Dosierbehältnisses 4, 4' geht relativ schnell vonstatten, da eine relativ große Entleeröffnung 32, 32' gewählt werden kann. Das Nachfüllen kann beispielsweise eine Zeitdauer von etwa 10 sec in Anspruch nehmen.

Nachdem das Dosierbehältnis 4, 4' wieder nachgefüllt wurde, kann die Überwachspause wieder aufgehoben werden. Dies geschieht zweckmäßigerweise rein zeitgesteuert, nachdem seit Beginn der veranlassten Überwachungspause eine vorgegebene und insbesondere in dem Speicher 24 abgespeicherte Zeitspanne verstrichen ist.

Die vorgenannte Zeitspanne orientiert sich zweckmäßigerweise an der zuvor empirisch ermittelten durchschnittlichen Entleerungsdauer des zugeordneten Nachfüllbehältnisses 25, 25' und wird vorzugsweise um einen Sicherheitsfaktor länger gewählt als die üblicherweise auftretende Entleerungsdauer.

Das Nachfüllen eines Dosierbehältnisses 4, 4' läuft zweckmäßigerweise zeitlich synchron mit einer Überwachungspause ab. Ist der Nachfüllvorgang beendet, endet auch die Überwachungspause und der normale Betrieb läuft weiter.

Nun schließt sich ein Wiederbefüllvorgang desjenigen Nachfüllbehältnisses 25, 25' an, dessen Futtermittel-Nachfüllmenge A', B' in das zugeordnete Dosierbehältnis 4, 4' abgegeben wurde. Hierzu wird die Wiederauffüllvorrichtung 29, 29' durch die Steuereinheit 11 aktiviert, so dass Futtermittel aus dem zugeordneten Vorratsbehältnis 26, 26' in das zuvor entleerte Nachfüllbehältnis 25, 25' umgefüllt wird.

Das Startsignal für diesen Wiederbefüllvorgang orientiert sich zweckmäßigerweise am Ende der Überwachungspause. Exemplarisch findet also bezüglich der Aktivierung einer Wiederauffüllvorrichtung 29, 29' ebenfalls eine zeitgesteuerte Betätigung statt, und zwar insbesondere dahingehend, dass mit Beendigung der Überwachungspause und des parallel stattfindenden Nachfüllvorganges ein Wiederauffüllvorgang hervorgerufen wird. Zeitgleich mit der Aktivierung der Wiederauffüllvorrichtung 29, 29' oder kurz davor wird das zum Entleeren des Nachfüllbehältnisses 25, 25' in die Offenstellung bewegte Verschlussmittel 33, 33' in die Schließstellung zurückbewegt.

Jedes Nachfüllbehältnis 25, 25' kann somit zwischen zwei aufeinanderfolgenden, sich auf das zugeordnete Dosierbehältnis 4, 4' beziehenden Nachfüllvorgängen bei laufendem Futtermittel-Ausgabevorgang dieses Dosierbehältnisses 4, 4' mit einer Futtermittel-Nachfüllmenge A', B' wiederaufgefüllt werden.

Der Wiederauffüllvorgang wird gestoppt, wenn der Füllstandsdetektor 28, 28' anspricht und ein entsprechendes Füllstandssignal an die elektronische Steuereinheit 11 übermittelt.

Durch die Kontrollwiegungen kann unabhängig von den bisher geschilderten Abläufen auch die Gesamtmenge des über die zugeordnete Futtermittel-Ausgabeeinrichtung 8, 8' ausgegebenen Futtermittels bestimmt werden. Diese Futtermittelmenge kann beispielsweise an der Eingabeeinrichtung 20 zur Anzeige gebracht werden. Auf diese Weise sind Rückschlüsse auf die im zugeordneten Vorratsbehältnis 26, 26' noch vorhandene Restmenge an Futtermittel möglich, so dass rechtzeitig eine Entscheidung getroffen werden kann, wann der Futtermittelvorrat wieder aufgefüllt werden muss. Da die Kontrollwiegungen jeweils nur kurzzeitig unterbrochen sind, wird diese Überwachungsfunktion nicht beeinträchtigt.

Die in jedem Nachfüllbehältnis 25, 25' bereitgehaltene Futtermittel-Nachfüllmenge ist insbesondere derart auf das Aufnahmevolumen des zugeordneten Dosierbehältnisses 4, 4' und auf dessen unteren Füllgrenzwert abgestimmt, dass pro Nachfüllvorgang die gesamte im Nachfüllbehältnis 25, 25' vorhandene Futtermittel-Nachfüllmenge A', B' in einem Zug in das zugeordnete Dosierbehältnis 4, 4' umfüllbar ist. Zur Einhaltung der korrekten Futtermittel-Nachfüllmenge A', B' trägt exemplarisch der Füllstandsdetektor 28, 28' bei. Beim Ausführungsbeispiel sind die Dosierbehältnisse 4, 4' und Nachfüllbehältnisse 25, 25' in ihren maximalen Aufnahmevolumina untereinander zumindest im Wesentlichen identisch ausgebildet.

Alternativ zum geschilderten Ausführungsbeispiel kann die Beendigung einer Überwachungspause bzw. des parallel ablaufenden Nachfüllvorganges auch ohne Zeitsteuerung rein ereignisgesteuert hervorgerufen werden. So kann beispielsweise das Nachfüllbehältnis 25, 25' einen nicht dargestellten weiteren Füllstandsdetektor enthalten, der bei vollständig oder bis auf eine bestimmte Menge entleertem Nachfüllbehältnis 25, 25' anspricht, um die gleichen Aktionen zu starten, die nach Ablauf des bei der alternativ nutzbaren Zeitsteuerung vorgesehenen Zeitfensters gestartet werden. Ebenso kann als Startereignis für diese Aktionen das Erreichen eines oberen Füllgrenzwertes des Dosierbehältnisses 4, 4' herangezogen werden, der durch eine dem Dosierbehältnis 4, 4' zugeordnete Überwachungseinrichtung überwachbar ist und bei dem es sich beispielsweise um eine maximale Füllhöhe oder um ein maximales Füllgewicht handelt.

## Patentansprüche

1. Fütterungsanlage für die Tierhaltung, mit einer Zubereitungsstation (1), in der unter Verwendung verschiedener Futtermittel (A, B), die in von Zeit zu Zeit nachzufüllenden Dosierbehältnissen (4, 5) bereitstellbar sind, tierspezifische Futtermittelmischungen zubereitbar sind und die mehrere Dosierbehältnisse (4, 5) enthält, denen jeweils eine Waage (18, 18') und eine elektromotorisch betätigte Futtermittel-Ausgabeeinrichtung (8, 8') zugeordnet sind, wobei den Elektromotoren (10, 10') der Futtermittel-Ausgabeeinrichtungen (8, 8') gemeinsam eine Steuereinrichtung (12) zugeordnet ist, durch die eine gleichzeitige Futtermittel-Ausgabe unterschiedlicher variabler Ausgaberaten der einzelnen Futtermittel-Ausgabeeinrichtungen (8, 8') steuerbar ist, wobei die Steuereinrichtung (12) über eine elektronische Steuereinheit (11) verfügt, die mit einem Regler (14) ausgestattet ist, der zur voneinander unabhängigen drehzahlgeregelten Ansteuerung der Elektromotoren (10, 10') einer oder mehrerer der Futtermittel-Ausgabeeinrichtungen (8, 8') ausgebildet ist, wobei als Basis für die von dem Regler (14) generierbare und den Elektromotoren (10, 10') jeweils zuzuführende Stellgröße eine durch eine kontinuierliche oder von Zeit zu Zeit erfolgende Kontrollwiegung mittels einer Waage (18, 18') erfasste Gewichtsänderung der im jeweils zugeordneten Dosierbehältnis (4, 4') befindlichen Futtermittelmenge herangezogen wird, **dadurch gekennzeichnet, dass** die Steuereinrichtung (12) ausgebildet ist, um ein Nachfüllen mit Futtermittel der durch Kontrollwiegungen hinsichtlich ihrer Gewichtsänderung überwachbaren Dosierbehältnisse (4, 4') bei laufendem Futtermittel-Ausgabevorgang zu bewirken, wobei die bei laufendem Futtermittel-Ausgabevorgang stattfindenden Nachfüllvorgänge mit Überwachungspausen einhergehen, während denen die bezüglich des jeweils zugeordneten Dosierbehältnisses (4, 4') auftretenden Gewichtsänderungen bei der Bestimmung der Stellgrö-βe des zugeordneten Elektromotors (10, 10') unberücksichtigt bleiben.

2. Fütterungsanlage nach Anspruch 1, **dadurch gekennzeichnet, dass** die Waagen (18, 18') während den Überwachungspausen durch die Steuereinrichtung (12) deaktivierbar sind, derart, dass sie in diesem Zeitraum kein Wiegesignal als Regelgröße (17, 17') an die Steuereinrichtung (12) übermitteln.

3. Fütterungsanlage nach Anspruch 1 oder 2, **dadurch gekennzeichnet, dass** die Steuereinrichtung (12) ausgebildet ist, um jeweils einen von einer Überwachungspause begleiteten Nachfüllvorgang zu initiieren, wenn die Füllmenge des jeweils zugeordneten Dosierbehältnisses (4, 4') einen unteren Füllgrenzwert erreicht hat, wobei der untere Füllgrenzwert zweckmäßigerweise ein Gewichtsgrenzwert ist, der in einem Vergleicher (27) der Steuereinrichtung (12) mit den bei den Kontrollwiegungen ermittelten Gewichtsdaten vergleichbar ist.

4. Fütterungsanlage nach einem der Ansprüche 1 bis 3, **dadurch gekennzeichnet, dass** jedem Dosierbehältnis (4, 5) ein eigenes Nachfüllbehältnis (25, 25') zugeordnet ist, in dem eine Futtermittel-Nachfüllmenge bereitstellbar ist, die bei einem von einer Überwachungspause begleiteten Nachfüllvorgang in das zugeordnete Dosierbehältnis (4, 4') umfüllbar ist.

5. Fütterungsanlage nach Anspruch 4, **dadurch gekennzeichnet, dass** jedem Nachfüllbehältnis (25, 25') ein Füllstandsdetektor (28, 28') zugeordnet ist, der insbesondere einen vorgegebenen maximalen Füllstand detektieren kann, um einen bezüglich dem Nachfüllbehältnis (25, 25') stattfindenden Wiederauffüllvorgang zu beenden.

6. Fütterungsanlage nach Anspruch 4 oder 5, **dadurch gekennzeichnet, dass** jedem Nachfüllbehältnis (25, 25') ein eigenes Vorratsbehältnis (26, 26'), insbesondere ein Vorratssilo, zugeordnet ist, das über ein größeres maximales Füllvolumen als das zugeordnete Nachfüllbehältnis (25, 25') verfügt und aus dem das Nachfüllbehältnis (25, 25') zwischen zwei das zugeordnete Dosierbehältnis (4, 4') betreffenden Nachfüllvorgängen bzw. Überwachungspausen wiederauffüllbar ist.

7. Fütterungsanlage nach Anspruch 6, **dadurch gekennzeichnet, dass** jedem Vorratsbehältnis (26, 26') eine durch die Steuereinrichtung (12) elektrisch gesteuerte Wiederauffüllvorrichtung (29, 29') zugeordnet ist, mit der im jeweiligen Vorratsbehältnis (26, 26') befindliches Futtermittel, insbesondere nach Beendigung einer Überwachungspause, zum Wiederauffüllen des zugeordneten Nachfüllbehältnisses (25, 25') in dieses Nachfüllbehältnis (25, 25') umfüllbar ist.

8. Fütterungsanlage nach einem der Ansprüche 4 bis 7, **dadurch gekennzeichnet, dass** die Dauer der Überwachungspausen mindestens der Zeitdauer der zuvor empirisch ermittelten Entleerungsdauer des zugeordneten Nachfüllbehältnisses (25, 25') entspricht.

9. Fütterungsanlage nach einem der Ansprüche 1 bis 8, **dadurch gekennzeichnet, dass** die Steuereinrichtung (12) ausgebildet ist, um die Überwachungspausen zeitgesteuert nach Verstreichen einer vorgegebenen Zeitspanne zu beenden.

10. Fütterungsanlage nach einem der Ansprüche 1 bis 9, **dadurch gekennzeichnet, dass** die Steuereinrichtung (12) mit wenigstens einer Eingabeeinrichtung (20) zur variablen Vorgabe des Mischungsverhältnisses und/oder der Menge der einzelnen zuzubereitenden Futtermittelmischungen ausgestattet ist.

11. Fütterungsanlage nach einem der Ansprüche 1 bis 10, **dadurch gekennzeichnet, dass** jedem drehzahlgeregelten Elektromotor (10, 10') ein Frequenzgenerator (13, 13') zugeordnet ist, der auf Basis der Stellgröße (15, 15') eine die jeweilige Motordrehzahl variabel vorgebende Ausgangsfrequenz erzeugt.

12. Verfahren zum Betreiben einer Fütterungsanlage für die Tierhaltung, wobei die Fütterungsanlage eine Zubereitungsstation (1) aufweist, in der unter Verwendung verschiedener Futtermittel (A, B), die in von Zeit zu Zeit nachzufüllenden Dosierbehältnissen (4, 5) bereitgestellt werden, tierspezifische Futtermittelmischungen zubereitbar sind und die mehrere Dosierbehältnisse (4, 5) enthält, denen jeweils eine Waage (18, 18') und eine elektromotorisch betätigte Futtermittel-Ausgabeeinrichtung (8, 8') zugeordnet sind, wobei den Elektromotoren (10, 10') der Futtermittel-Ausgabeeinrichtungen (8, 8') gemeinsam eine Steuereinrichtung (12) zugeordnet ist, durch die eine gleichzeitige Futtermittel-Ausgabe unterschiedlicher variabler Ausgaberaten der einzelnen Futtermittel-Ausgabeeinrichtungen (8, 8') steuerbar ist, wobei die Steuereinrichtung (12) über eine elektronische Steuereinheit (11) verfügt, die mit einem Regler (14) ausgestattet ist, der zur voneinander unabhängigen drehzahlgeregelten Ansteuerung der Elektromotoren (10, 10') einer oder mehrerer der Futtermittel-Ausgabeeinrichtungen (8, 8') ausgebildet ist, wobei als Basis für die von dem Regler (14) generierbare und den Elektromotoren (10, 10') jeweils zuzuführende Stellgröße eine durch eine kontinuierliche oder von Zeit zu Zeit erfolgende Kontrollwiegung mittels einer Waage (18, 18') erfasste Gewichtsänderung der im jeweils zugeordneten Dosierbehältnis (4, 4') befindlichen Futtermittelmenge herangezogen wird, **dadurch gekennzeichnet, dass** das Nachfüllen mit Futtermittel der durch Kontrollwiegungen hinsichtlich ihrer Gewichtsänderung überwachten Dosierbehältnisse (4, 4') bei laufendem Futtermittel-Ausgabevorgang durchgeführt wird, wobei während den Nachfüllvorgängen die bezüglich des jeweils zugeordneten Dosierbehältnisses (4, 4') auftretenden Gewichtsänderungen bei der Bestimmung der Stellgröße des zugeordneten Elektromotors (10, 10') unberücksichtigt bleiben.

13. Verfahren nach Anspruch 12, **dadurch gekennzeichnet, dass** während den Nachfüllvorgängen der Dosierbehältnisse (4, 4') keine Kontrollwiegungen vorgenommen werden.

14. Verfahren nach Anspruch 12 oder 13, **dadurch gekennzeichnet, dass** jeweils ein von einer Überwachungspause begleiteter Nachfüllvorgang initiiert wird, wenn die Füllmenge des jeweils zugeordneten Dosierbehältnisses (4, 4') einen unteren Füllgrenzwert erreicht hat, wobei der untere Füllgrenzwert zweckmäßigerweise ein Gewichtsgrenzwert ist, der mit den bei den Kontrollwiegungen ermittelten Gewichtsdaten verglichen wird.

15. Verfahren nach einem der Ansprüche 12 bis 14, **dadurch gekennzeichnet, dass** jedes Dosierbehältnis (4, 4') aus einem ihm individuell zugeordneten Nachfüllbehältnis (25, 25') nachgefüllt wird.

16. Verfahren nach einem der Ansprüche 12 bis 15, **dadurch gekennzeichnet, dass** jedes Nachfüllbehältnis (25, 25') zwischen zwei aufeinanderfolgenden Nachfüllvorgängen bei laufendem Futtermittel-Ausgabevorgang der Dosierbehältnisse (4, 4') insbesondere aus einem ihm individuell zugeordneten Vorratsbehältnis (26, 26') mit einer Futtermittel-Nachfüllmenge wiederaufgefüllt wird.
